# FASCICULE DE BREVET EUROPEEN

(11) **EP 0 789 677 B1**
(45) Date de publication et mention de la délivrance du brevet: **30.12.1998**
(21) Numéro de dépôt: 95936611.3
(22) Date de dépôt: 26.10.1995
(51) Int. Cl.: C04B 41/81

(54) **PROCEDE POUR LA PROTECTION CONTRE L'OXYDATION DE PIECES EN MATERIAU COMPOSITE CONTENANT DU CARBONE**
VERFAHREN ZUM AUFBRINGEN EINES OXYDATIONSSCHUTZES AUF KOHLENSTOFF ENTHALTENDE VERBUNDMATERIALEN
METHOD FOR THE OXIDATION PROTECTION OF ARTICLES MADE OF A CARBON-CONTAINING COMPOSITE MATERIAL

(30) Priorité: 04.11.1994 FR 9413179
(43) Date de publication de la demande: 20.08.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: BALHADERE, Aline, F-33930 Vendays-Montalivet (FR); THEBAULT, Jacques, F-33200 Bordeaux (FR); BERNARD, Bruno, F-33600 Pessac (FR)
(74) Mandataire: Joly, Jean-Jacques
(86) Numéro de dépôt international: FR9501417
(87) Numéro de publication internationale: WO9614276

(56) Documents cités:
- US-A- 4 439 491
- US-A- 5 039 550
- DATABASE WPI Section Ch, Week 8141 Derwent Publications Ltd., London, GB; Class L02, AN 81-74996D & JP,A,56 109 878 ( TOYOTA MOTOR KK) , 31 Août 1981
- PATENT ABSTRACTS OF JAPAN vol. 013 no. 331 (C-622) ,25 Juillet 1989 & JP,A,01 111774 (NHK SPRING CO LTD) 28 Avril 1989,

## Description

La présente invention concerne la protection contre l'oxydation de pièces en matériau composite contenant du carbone.

Les matériaux composites ici concernés sont notamment les matériaux constitués d'un renfort fibreux densifié par une matrice, dans lesquels le carbone est présent dans les fibres, dans la matrice, et/ou dans une couche d'adaptation ou interphase entre fibres et matrice. De tels matériaux composites sont en particulier les matériaux composites thermostructuraux dans lesquels le renfort fibreux et la matrice sont en carbone ou céramique avec interposition éventuelle d'une interphase en nitrure de bore ou carbone pyrolytique entre fibres et matrice. Ces matériaux sont caractérisés par leurs bonnes propriétés mécaniques. Lorsqu'ils contiennent du carbone, leur capacité à conserver durablement ces propriétés à température élevée est conditionnée par la présence d'une protection antioxydation efficace. Il en est ainsi même lorsque le carbone n'est présent que dans une interphase en carbone pyrolytique entre fibres en céramique et matrice céramique. Or, quel que soit le mode d'élaboration des matériaux composites thermostructuraux - densification par voie liquide consistant à imprégner le renfort fibreux par un précurseur liquide et à transformer ensuite le précurseur par traitement thermique, ou densification par infiltration chimique en phase vapeur -, les matériaux obtenus présentent une porosité interne résiduelle ouverte offrant à l'oxygène du milieu ambiant un accès au coeur du matériau.

Un domaine d'application particulier, mais non limitatif, où des matériaux composites contenant du carbone sont susceptibles de s'oxyder lors de leur utilisation, est le domaine des disques de freins, par exemple les disques de freins d'avions en matériau composite carbone-carbone (renfort en fibres de carbone densifié par une matrice en carbone).

Un procédé bien connu pour protéger un matériau contenant du carbone contre l'oxydation consiste à former un revêtement constituant une barrière vis-à-vis de l'oxygène du milieu ambiant.

Dans le cas de matériaux poreux, une protection antioxydation efficace est obtenue lorsque la barrière de protection est ancrée au sein de la porosité interne des matériaux, c'est-à-dire tapisse les parois dcs pores accessibles depuis l'extérieur (surface réelle du matériau), et ne constitue pas simplement une couche de revêtement de surface externe.

Il est connu qu'une protection efficace contre l'oxydation de matériaux poreux contenant du carbone peut être réalisée par imprégnation des matériaux avec des solutions aqueuses de phosphates, suivie d'une opération de séchage. Les phosphates peuvent être des phosphates simples tels que des phosphates de magnésium, d'aluminium, de calcium, de zinc, etc. additionnés ou non d'acide phosphorique et en dilutions variées. Des phosphates complexes peuvent aussi être efficaces, par exemple des phosphates complexes d'aluminium et de calcium.

Un avantage particulier des phosphates réside dans leur faculté de s'opposer à l'effet d'agents catalytiques de l'oxydation du carbone. Il est en effet bien connu que la réaction entre le carbone et l'oxygène peut être accélérée par la présence de certains éléments, tels que les alcalins et les alcalino-terreux introduits par ou provenant de, par exemple, le chlorure de sodium (eau de mer), l'acétate de potassium, ... Ces catalyseurs d'oxydation peuvent être des impuretés amenées par le milieu environnant (pollution, encrassage, exposition au milieu marin, ...) ou des impuretés provenant d'un processus de fabrication, par exemple des résidus issus de la fabrication des fibres en carbone (précurseurs, produits d'ensimage ajoutés en vue du tissage, ...).

Les phosphates sont donc de bons candidats pour la réalisation d'une protection anti-oxydation interne dans des matériaux poreux contenant du carbone, et des procédés comprenant l'imprégnation de tels matériaux par des compositions susceptibles de laisser un revêtement à base de phosphate sur les parois des pores accessibles de l'extérieur sont décrits en particulier dans les documents US-A-3 351 477, US-A-4 292 345, FR-A-2 685 694 et US-A-4 439 491.

Le document US-A-3 551 477 préconise l'utilisation d'une composition d'imprégnation constituée d'une solution aqueuse relativement concentrée, avec stipulation d'un ordre particulier d'introduction de précurseurs du revêtement phosphate à obtenir. Ainsi, la mise en solution des précurseurs débute avec l'acide phosphorique dont la présence permet la dissolution des autres précurseurs.

Le document US-A-4 292 345 propose une imprégnation en plusieurs étapes, d'abord avec de l'acide orthophosphorique, qui est séché, puis avec une solution d'un composé organique capable, après élévation de la température, de réagir avec l'acide pour former des phosphates.

Le document FR-A-2685694 divulgue un procédé comprenant l'imprégnation d'un matériau composite par une solution de phosphates de sodium et de potassium, suivie d'un séchage et d'un traitement thermique afin de former une protection interne qui nappe les parois des pores ouverts du matériau.

Quant au document US-A-4 439 491, il décrit un procédé de protection de carbone ou graphite contre l'oxydation par application d'une solution aqueuse de phosphate d'ammonium, orthophosphate de zinc, acide phosphorique, acide borique et acide cuprique. Un agent mouillant est ajouté à la solution.

L'utilisation d'un agent mouillant vise à faciliter la pénétration de la composition au sein de la porosité interne ouverte du matériau composite. En effet, la mouillabilité du carbone par l'eau ou une solution aqueuse est variable. Elle dépend de nombreux paramètres dont la nature du carbone (graphite, coke de résine, coke de brai, carbone pyrolytique, carbone vitreux, ...) ainsi que des traitements physicochimiques subis tels que les traitements à haute température (à plus de 1 200°C dans le cas de graphitation) ou des traitements chimiques ou électrochimiques oxydants. L'agent mouillant doit être compatible avec la solution aqueuse de phosphates, qui est très acide, et ne doit pas altérer l'homogénéité et la stabilité de la solution.

L'obtention d'une protection interne efficace de façon durable nécessite l'introduction d'une quantité relativement importante de phosphates, donc l'utilisation de solutions aqueuses concentrées.

La demanderesse a constaté que de telles solutions aqueuses très concentrées, même additionnées d'un agent mouillant, peuvent difficilement pénétrer à plus de 1 mm de profondeur dans des matériaux carbone-carbone du type de ceux utilisés pour des disques de freins. La raison tient vraisemblablement à la viscosité de ces solutions et à la mauvaise mouillabilité par l'eau des carbones incomplètement graphités. la protection obtenue s'apparente alors plus à une protection externe, de surface, qu'à une protection interne et ancrée dans le volume du matériau. De plus, dans le cas de disques de freins, la demanderesse a constaté qu'une présence de phosphates en trop forte quantité au niveau des surfaces frottantes diminue de façon significative les caractéristiques de frottement.

Aussi, la présente invention a-t-elle pour but de fournir un procédé permettant d'imprégner en profondeur, au sein de la porosité interne ouverte d'un matériau composite contenant du carbone, une composition contenant une solution concentrée de phosphates, apte à former une protection anti-oxydation efficace ancrée dans le volume du matériau et non seulement à sa surface. L'invention a aussi pour but de fournir un procédé permettant de maîtriser la pénétration de la composition d'imprégnation dans le matériau, afin de réaliser une protection contrôlée et reproductible.

Ce but est atteint du fait que, conformément à l'invention, le procédé comprend, avant l'étape d'application de la composition d'imprégnation, les étapes préalables de traitement en profondeur de la pièce en matériau composite au moyen d'une solution aqueuse pénétrant au sein de la porosité interne ouverte du matériau composite, et de séchage de la solution aqueuse, celle-ci contenant un additif qui, après séchage, confère au matériau composite une mouillabilité accrue par la composition d'imprégnation.

De préférence, l'additif contenu dans la solution aqueuse est constitué par au moins un agent surfactif, ou mouillant, soluble dans l'eau et non ionique, tel qu'un acide gras oxyéthyléné, un alcool gras oxyéthyléné, un alkyl-phénol oxyéthyléné ou un ester de poly-ol supérieur. Il est en outre souhaitable de ne pas utiliser un additif susceptible de laisser dans le matériau composite un résidu catalyseur de l'oxydation du carbone.

De façon tout à fait remarquable, le prétraitement des pièces en matériau composite par une solution aqueuse contenant un additif qui, après séchage, améliore la mouillabilité du matériau, a permis de faire pénétrer en profondeur des compositions d'imprégnation sous forme de solutions concentrées de phosphates, aboutissant à la formation de protections internes s'étendant sur une épaisseur relativement importante, par exemple de 2 mm à 10 mm, et ce de façon contrôlable, homogène et reproductible.

La solution aqueuse utilisée pour le prétraitement peut être très fluide et pénétrer facilement au coeur du matériau, l'additif étant ajouté à l'eau dans une quantité représentant de préférence entre 0,05 % et 5 % du poids de l'eau.

Une telle amélioration de la mouillabilité en profondeur ne peut être obtenue de la même façon lorsque l'agent mouillant est incorporé à une composition d'imprégnation concentrée dont la viscosité limite la faculté de pénétration au sein du matériau.

La composition d'imprégnation à base de polyphosphate est appliquée à la surface de la pièce en matériau composite sous pression atmosphérique, par exemple par peinture au moyen d'un pinceau ou d'une brosse ou par pulvérisation. Il n'est pas nécessaire de faire appel à une surpression ou au vide pour forcer la composition d'imprégnation à pénétrer profondément sous l'effet d'une différence de pression. En outre, l'application de la composition d'imprégnation peut facilement être réalisée de façon sélective sur certaines parties seulement de la pièce.

Avantageusement, le traitement par la solution aqueuse contenant le surfactif est réalisé aussi pour nettoyer la pièce en matériau composite. Du fait qu'un nettoyage à l'eau en profondeur est dans certains cas nécessaire, notamment pour éliminer des poussières ou des débris d'usinage accumulés dans la porosité interne, la mise en oeuvre de l'invention ne nécessite aucune opération supplémentaire puisqu'il suffit d'ajouter l'additif à l'eau de nettoyage.

Des exemples de réalisation du procédé conforme à l'invention sont décrits ci-après dans le cadre de l'application au traitement anti-oxydation de disques de freins d'avions en matériau composite carbone-carbone.

Sur les dessins annexés :
- la figure 1 est une vue de face d'un secteur de disque de frein rotor en matériau carbone-carbone muni d'une protection interne antioxydation par un procédé conforme à l'invention ;
- la figure 2 est une vue schématique en élévation de côté dans le plan radial II-II de la figure 1 ;
- la figure 3 est une vue schématique en élévation de côté dans le plan radial III-III de la figure 1 ;
- la figure 4 est une vue de face d'un secteur de disque de frein stator en matériau carbone-carbone muni d'une protection anti-oxydation par un procédé conforme à l'invention, disque destiné à être placé à une extrémité d'un ensemble de disques stators et rotors formant un frein d'avion multidisques ;
- la figure 5 est une vue schématique en élévation de côté selon le plan radial V-V de la figure 4 ; et
- la figure 6 est une vue schématique en élévation de côté selon le plan radial VI-VI de la figure 4.

### EXEMPLE 1

Un disque rotor d'un frein d'avion multidisques est réalisé en matériau composite carbone-carbone par formation d'une préforme fibreuse constituée de strates bidimensionnelles liées entre elles par aiguilletage, densification de la préforme par une matrice carbone formée par infiltration chimique en phase vapeur et usinage du disque à sa forme et ses dimensions finales.

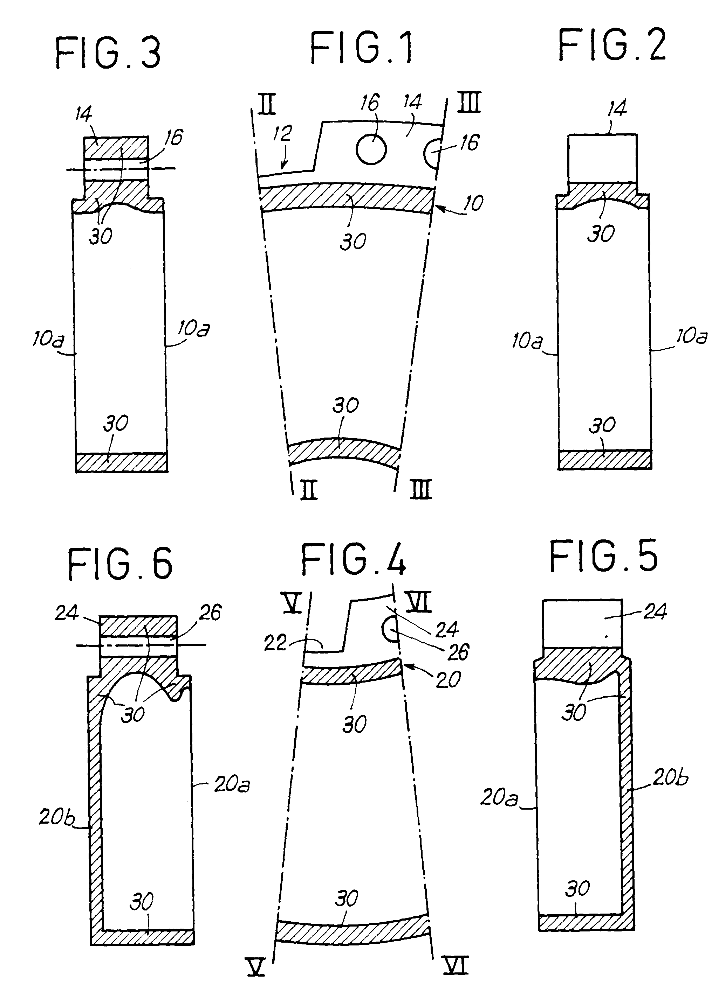

Comme le montrent les figures 1 à 3, le disque 10 présente à sa périphérie des encoches 12 destinées à coopérer avec des cannelures d'un manchon solidaire en rotation d'une roue sur laquelle le frein est monté. Les créneaux 14 entre les encoches présentent des trous 16 destinés à permettre la fixation d'étriers métalliques.

Le disque ainsi réalisé est immergé dans un bac à ultrasons contenant de l'eau à laquelle est ajouté 0,5 % en poids de "Marlophen 89" commercialisé par la société allemande Hüls et à base d'alkylphénol polyéthylèneglycol éther. Le traitement du disque dans la solution aqueuse permet son nettoyage et l'élimination des résidus d'usinage. L'utilisation à cet effet d'un bac à ultrasons est bien connue en soi. Le traitement permet en outre, grâce à la grande fluidité de la solution aqueuse, d'introduire le "Marlophen 89" dans toute la porosité accessible du matériau composite. Le disque est ensuite sorti du bain de solution aqueuse et séché en étuve à environ 100°C pendant environ 5 h, laissant les parois des pores du matériau tapissées de "Marlophen 89".

Une solution aqueuse de dihydrogénophosphate d'aluminium Al(H₂PO₄)₃ concentré à 50 % en poids est appliquée au pinceau sur les surfaces extérieures du disque, y compris les parois des trous 16, à l'exception des faces frottantes 10a. Une telle solution est fournie par la société des Etats-Unis d'Amérique Alfa et comercialisée en France par la société française Biovalley sous l'appellation aluminium dihydrogen phosphate 50 %, ou encore fournie par la société française Rhone-Poulenc et commercialisée en France par la société française Eurofos sous l'appellation phosphate monoaluminique. Après une période de quelques minutes nécessaire pour que la solution pénètre dans la porosité du matériau, une deuxième couche est appliquée de la même façon et on attend au moins 30 min avant de commencer l'opération de séchage.

Le séchage est effectué en étuve à l'air selon le cycle suivant :

| | Vitesse de montée en température (°C/min) | Durée de palier (heures) |
|---|---|---|
| 20°C à 90°C | - | 5 |
| 90°C à 150°C | 1°C/min | 3 |
| 150°C à 220°C | 1°C/min | 1 |
| 220°C à 350°C | 1°C/min | 1 |

Après séchage et retour à température ambiante, la pièce est traitée thermiquement dans un four sous atmosphère d'azote selon le cycle suivant :
- montée de 20°C à 300°C à une vitesse de 5°C/min,
- montée de 300°C à 700°C à une vitesse de 2°C/min, et
- palier de 5 h à 700°C.

Après refroidissement, le disque est soumis à un test d'oxydation. Un secteur du disque est sectionné et oxydé sous air pendant 2 h à 650°C après avoir été "pollué" par un catalyseur d'oxydation (acétate de potassium). Les zones fortement protégées de l'oxydation, c'est-à-dire celles où le dihydrogénophosphate d'aluminium a pénétré profondément, sont ainsi révélées.

Le résultat est transcrit sur les figures 1 à 3, les zones 30 de pénétration de la protection étant hachurées. Ce test illustre la profondeur et l'homogénéité de la pénétration de la protection. La profondeur moyenne est d'environ 6 mm avec un minimum compris entre 2 et 3 mm et un maximum compris entre 10 et 11 mm. La surface externe des zones protégées (peintes) est identique à l'état initial. Aucun fragment ne se détache (pas de formation de poussières) et aucune attaque n'est visible au niveau des arêtes vives du disque.

### EXEMPLE 2

Le processus de l'exemple 1 est mis en oeuvre pour un disque stator 20 en matériau composite carbone-carbone ayant sensiblement les mêmes dimensions que le disque rotor 10. Le disque 20 (figures 4, 5 et 6) présente une couronne intérieure avec des encoches 22 destinées à coopérer avec des cannelures d'un moyeu fixe. Les créneaux 24 entre les encoches présentent des trous 26 de fixation d'étriers métalliques.

Dans cet exemple, le disque 20 est un disque d'extrémité destiné à être placé à une extrémité d'un ensemble de disques stators et rotors d'un frein d'avion à disques multiples. Le disque 20 présente une seule face frottante 20a, la face opposée 20b étant une face d'appui.

Après traitement préalable comme dans l'exemple 1, la composition d'imprégnation de l'exemple 1 est appliquée sur toutes les surfaces du disque, y compris la face d'appui 20b, mais à l'exception de la face frottante 20a.

Les figures 4, 5 et 6 montrent les zones 30 de pénétration de la protection, telles que révélées après le test d'oxydation. La face d'appui 20b est protégée sur une épaisseur régulière d'environ 4 mm, un peu plus faible que dans d'autres zones. Les fibres du renfort fibreux du matériau composite étant disposées parallèlement aux faces du disque, elles ne facilitent pas la pénétration en profondeur de la composition d'imprégnation. Cet exemple montre toutefois qu'une profondeur importante peut être atteinte, confirmant la capacité du procédé selon l'invention à apporter une protection efficace quelle que soit l'orientation des fibres dans le matériau composite.

On appréciera que selon l'invention, la protection est restée limitée à la zone "externe" du disque et plus particulièrement n'a pas traversé l'épaisseur du disque. Le fait de contrôler ainsi la pénétration évite que la protection ne traverse le disque et vienne alors perturber et diminuer les caractéristiques tribologiques du matériau au niveau de la face frottante, opposée.

### EXEMPLES 3, 4, 5

On procède comme dans l'exemple 1, mais en remplaçant le disque rotor par des éprouvettes parallélépipédiques de plus petites dimensions (20 x 25 x 30 mm) et en utilisant différentes proportions en poids de "Marlophen 89" lors du prétraitement des pièces :
- exemple 3 : proportion de 0,05 % en poids par rapport au poids de l'eau,
- exemple 4 : proportion de 0,5 %,
- exemple 5 : proportion de 5 %.

Après section et oxydation des éprouvettes, on observe une épaisseur de protection allant de 4 à 6 mm en moyenne, avec une augmentation légère en fonction du taux d'additif, augmentation plus sensible lorsque l'on passe de 0,05 % à 0,5 % que de 0,5 % à 5 %

### EXEMPLES 6, 7, 8

On procède comme dans l'exemple 1, mais en remplaçant le disque rotor par des éprouvettes parallélépipédiques de plus petites dimensions (20 x 25 x 30 mm) et en remplaçant le "Marlophen 89" par les additifs suivants, au taux de 1 % en poids :
- exemple 6 : un agent surfactif commercialisé sous la dénomination "BYK181" par la société allemande BYK Chemie, à base d'un sel d'alkylène ammonium d'un polymère polyfonctionnel à caractère non ionique,
- exemple 7 : un agent surfactif commercialisé sous la dénomination "BEYCOSTAT C213" par la société.française CECA Gerland, à base d'un ester phosphorique,
- exemple 8: un agent surfactif produit sous la dénomination "EMPILAN KAS/90" par la société Albright & Wilson Detergents Group, commercialisé en France par la société SCPI, à base d'un acide gras linéaire en C10-C12 pentaoxyéthyléné non ionique,

Après section des éprouvettes et oxydation, on observe des épaisseurs protégées allant de 3 mm à 8 mm selon l'additif utilisé.

Ces exemples montrent que le procédé selon l'invention peut être mis en oeuvre avec des solutions aqueuses de prétraitement des pièces formées par mise en solution de différents produits connus pour leur activité d'agents mouillants ou surfactifs, ceux-ci étant choisis de préférence pour ne pas laisser de résidus catalyseurs d'oxydations du carbone au sein du matériau.

Bien que les exemples 1 et 2 concernent des disques de freins d'avions en matériau composite carbone-carbone, le procédé selon l'invention est applicable à toutes autres pièces, qu'elles soient en matériau composite carbone-carbone ou, plus généralement, en matériau composite contenant du carbone, par exemple un composite à matrice céramique tel qu'un composite C/SiC (renfort en fibres de carbone et matrice en carbure de silicium).

## Revendications

1. Procédé pour la protection contre l'oxydation d'une pièce en matériau composite contenant du carbone et présentant une porosité résiduelle interne ouverte, procédé comportant l'application d'une composition d'imprégnation constituée par une solution d'au moins un phosphate,
procédé caractérisé en ce que, avant application de la composition d'imprégnation, il comprend les étapes préalables de traitement en profondeur de la pièce en matériau composite au moyen d'une solution aqueuse pénétrant au sein de la porosité interne ouverte du matériau composite, et séchage de la solution aqueuse, celle-ci contenant un additif qui, après séchage, confère au matériau composite une mouillabilité accrue par la composition d'imprégnation.

2. Procédé selon la revendication 1, caractérisé en ce que l'additif contenu dans la solution aqueuse est constitué par au moins un agent surfactif soluble dans l'eau et non ionique, tel qu'un acide gras oxyéthyléné, un alcool gras oxyéthyléné, un alkyl-phénol oxyéthyléné ou un ester de poly-ol supérieur.

3. Procédé selon l'une quelconque des revendications 1 et 2, caractérisé en ce que la quantité d'additif ajoutée à l'eau pour former la solution aqueuse représente entre 0,05 % et 5 % du poids de l'eau.

4. Procédé selon l'une quelconque des revendications précédentes, caractérisé en ce que l'application de la composition d'imprégnation à la surface de la pièce est réalisée à la pression atmosphérique.

5. Procédé selon la revendication 4, caractérisé en ce que l'application de la composition d'imprégnation est réalisée par peinture.

6. Procédé selon l'une quelconque des revendications précédentes, caractérisé en ce que le traitement par la solution aqueuse est réalisé aussi pour nettoyer la pièce en matériau composite.

7. Procédé selon l'une quelconque des revendications précédentes, caractérisé en ce que le traitement par la solution aqueuse est réalisé par immersion de la pièce dans un bac à ultrasons contenant la solution aqueuse.

## Patentansprüche

1. Verfahren zum Schützen eines Teils aus Verbundmaterial, das Kohlenstoff enthält und eine innere offene Restporosität aufweist, gegen Oxidation, wobei das Verfahren das Aufbringen einer aus einer Lösung mindestens eines Phosphats bestehenden Imprägnierungs-Zusammensetzung umfaßt,
dadurch gekennzeichnet, daß das Verfahren vor dem Aufbringen der Imprägnierungs-Zusammensetzung die vorausgehenden Schritte aufweist der Tiefenbehandlung des Teils aus Verbundmaterial mittels einer wäßrigen Lösung, die ins Innere der inneren offenen Porosität des Verbundmaterials eindringt, und der Trocknung der wäßrigen Lösung, welche einen Zusatz enthält, der nach der Trocknung dem Verbundmaterial eine gesteigerte Benetzbarkeit durch die Imprägnierungs-Zusammensetzung verleiht.

2. Verfahren nach Anspruch 1, dadurch gekennzeichnet, daß der in der wäßrigen Lösung enthaltene Zusatz aus mindestens einem in Wasser löslichen und nicht ionischen grenzflächenaktiven Mittel besteht, wie einer ethoxylierten Fettsäure, einem ethoxylierten Fettalkohol, einem ethoxylierten Alkylphenol oder einem Ester eines höheren Polyols.

3. Verfahren nach Anspruch 1 oder 2, dadurch gekennzeichnet, daß die zur Bildung der wäßrigen Lösung dem Wasser zugegebene Zusatz-Menge zwischen 0,05% und 5% des Gewichts des Wassers darstellt.

4. Verfahren nach einem der vorangehenden Ansprüche, dadurch gekennzeichnet, daß das Aufbringen der Imprägnierungs-Zusammensetzung auf die Oberfläche des Teils bei Atmosphärendruck durchgeführt wird.

5. Verfahren nach Anspruch 4, dadurch gekennzeichnet, daß das Aufbringen der Imprägnierungs-Zusammensetzung durch Anstrich durchgeführt wird.

6. Verfahren nach einem der vorangehenden Ansprüche, dadurch gekennzeichnet, daß die Behandlung mit der wäßrigen Lösung auch zum Reinigen des Teils aus Verbundmaterial durchgeführt wird.

7. Verfahren nach einem der vorangehenden Ansprüche, dadurch gekennzeichnet, daß die Behandlung mit der wäßrigen Lösung durch Eintauchen des Teils in einen die wäßrige Lösung enthaltenden Ultraschallbehälter durchgeführt wird.

## Claims

1. A method of protecting a part made of a composite material containing carbon against oxidation, the part presenting open internal residual pores and the method including the application of an impregnation composition constituted by a solution of at least one phosphate,
the method being characterized in that prior to the step of applying the impregnation composition, it includes prior steps of in-depth treatment of the part made of composite material by means of an aqueous solution that penetrates into the open internal pores of the composite material, and of drying the aqueous solution, which solution contains an additive that, after drying, imparts to the composite material, increased wettability by the impregnation composition.

2. A method according to claim 1, characterized in that the additive contained in the aqueous solution is constituted by at least one surfactant that is soluble in water and that is non-ionic, such as an oxyethylenated fatty acid, an oxyethylenated fatty alcohol, an oxyethylenated alkyl-phenol, or an ester of a high polyol.

3. A method according to any one of claims 1 and 2, characterized in that the quantity of additive added to water to form the aqueous solution lies in the range 0.05% to 5% by weight of the water.

4. A method according to any one of the preceding claims, characterized in that the impregnation composition is applied to the surface of the part under atmospheric pressure.

5. A method according to claim 4, characterized in that the impregnation composition is applied by being painted on.

6. A method according to any one of the preceding claims, characterized in that the treatment by means of the aqueous solution is also performed for the purpose of cleaning the part made of composite material.

7. A method according to any one of the preceding claims, characterized in that the treatment by means of the aqueous solution is performed by immersing the part in an ultrasound tank containing the aqueous solution.
